# EUROPÄISCHE PATENTSCHRIFT

(11) **EP 0 326 868 B1**
(45) Veröffentlichungstag und Bekanntmachung des Hinweises auf die Patenterteilung: **24.11.1993**
(21) Anmeldenummer: 89100929.2
(22) Anmeldetag: 20.01.1989
(51) Int. Cl.: B30B 1/32, B30B 15/00

(54) **Hydraulische Presse**
Hydraulic press
Presse hydraulique

(30) Priorität: 30.01.1988 DE 3802761
(43) Veröffentlichungstag der Anmeldung: 09.08.1989
(73) Patentinhaber: Umformtechnik ERFURT GmbH, D-99086 Erfurt (DE)
(72) Erfinder: Brüssel, Richard, Dipl.-Ing., D-7519 Sulzfeld (DE)

(56) Entgegenhaltungen:
- DE-A- 3 633 807
- DE-B- 1 136 574
- DE-C- 554 810
- FR-A- 2 495 513
- US-A- 4 470 787

## Beschreibung

Die Erfindung bezieht sich auf eine hydraulische Presse, insbesondere zum Formteilverpressen von faserverstärkten Kunststoffen, mit den Merkmalen nach dem Oberbegriff des Anspruchs 1.

Eine derartige Presse ist vorbekannt aus der US-PS 4 076 780. Bei solchen Pressen für die Kunststoffverarbeitung wird der Parallellauf des Pressenstößels in dem Bereich, in dem die Preßkraft wirksam wird, durch Gegenhalteeinrichtungen bewirkt. Die Führung des Pressenstößels während des Schließens, die im Schnellgang durchgeführt wird, muß den Pressenstößel nur noch in solchem Umfang zentrieren, daß ein stoßfreies Eintauchen der Werkzeugführungen sichergestellt wird. Dadurch, daß der Pressenstößel nach dem Kontakt mit den Gegenhalteeinrichtungen eine Beaufschlagung im Sinne einer statischen Oberbestimmtheit erfährt, wurde nach Wegen gesucht, die eine solche ausschließt. So ist es z.B. bereits bekanntgeworden, den Pressenstößel während des schnellen Schließens mit hydraulisch angestellten Laufrollen an beiderseits des Stößels angeordneten Rundsäulen zu führen und kurz nach dem Eintauchen der Werkzeugführungen diese Laufrollen kraftlos zu schalten, d.h. diese Stößelführung unwirksam werden zu lassen. Es ist bei derartigen Pressen ferner bekanntgeworden, die Preßzylinder mit dem Pressenstößel über Kugelkalotten zu verbinden.

Die bekannten Konstruktionen sind jedoch nicht in der Lage, die gewünschte freie Einstellung des Pressenstößels zu gewährleisten. Selbst die Kugelkalotten-Verbindung kann unter den vorliegenden Flächenpressungen als starre Verbindung angesehen werden.

Bei einer bekannten hydraulischen Presse (DE-OS 32 07 242) ist bereits ein hydrostatisches Lager zum Übertragen von Preßkraft eingesetzt worden, bei der die Preßkraft von unten in einen höhenverstellbaren Pressentisch eingeleitet wird. Das hydrostatische Lager ist dabei oben auf dem Kolben des Preßzylinders ausgebildet und weist demgemäß auch kein Element auf, in das ein Teil des zugeordneten Preßzylinders eintaucht. Bei dieser Einrichtung sind bei den die Preßkraft übertragenden Teilen die Dichtprobleme kaum lösbar.

Ferner ist aus der DE-AS 11 36 574 eine gattungsgemäße schubübertragende Einrichtung für hydraulische Pressen vorbekannt, die deren bewegliches Querhaupt mit Druck beaufschlagt. Diese Einrichtung weist jedoch im Zentrum des hydrostatischen Lagers noch ein weiteres als Kugelschale ausgebildetes Lager auf, das das hydrostatische Lager örtlich festlegt. Da die Hydraulikflüssigkeit dem hydrostatischen Lager aus dem Hydraulikzylinder über eine achsparallele Bohrung im Kolben zugeführt wird, muß außerdem der Kolben gegen ein Herausdrücken aus dem topfförmigen Lagerkörper gesichert werden, wozu ein jeweils zentrisch am Kopfende des Kolbens und im Lagerkörper befestigter Zuganker benötigt wird. Der wesentliche Nachteil der bekannten Einrichtung liegt jedoch darin, daß sie nur für eine mit einer Drucküberlagerungsstelle versehene hydraulische Presse geeignet ist, da bei gleichzeitigem Einsatz mehrerer solcher Einrichtungen, die parallel auf das bewegliche Pressen-Querhaupt einwirken, im Falle von dessen Neigungsverstellungen infolge von Abstandsveränderungen der in Normallage miteinander fluchtenden Achsen der einander zugeordneten Teile Zwängungen auftreten.

Der Erfindung liegt daher die Aufgabe zugrunde, eine Presse der eingangs genannten Art so zu gestalten, daß die Verbindung zwischen Preßzylinder und Pressenstößel eine Relativbewegung zuläßt, die zumindest querkraft- und momentenarm ausfällt.

Die Lösung der Aufgabe besteht in den Merkmalen des kennzeichnenden Teils des Anspruchs 1.

Die mit der Erfindung erzielten Vorteile liegen insbesondere darin, daß trotz der praktisch querkraft- und momentenfreien Verbindung die erforderliche Einleitung großer Normalkräfte in den Pressenstößel nicht beeinträchtigt wird.

Besonders geeignet ist der Einsatz der Erfindung für Pressen, bei denen der oder die Preßzylinder über dem Pressenstößel angeordnet sind und ggf. in entsprechende oben offene Ausnehmungen des Pressenstößels eintauchen. Es ist jedoch auch eine Anwendung bei anderen Preßkraft-Übertragungssystemen durch geeignete, die Kräfte umleitende Konstruktionen ohne Schwierigkeiten möglich.

Vorteilhafte Ausgestaltungen der Erfindung sind Gegenstand der Ansprüche 2 bis 11.

In der Zeichnung sind zwei Ausführungsbeispiele der Erfindung schematisch dargestellt und nachfolgend näher erläutert. Es zeigt:
- Fig. 1: eine hydraulische Presse in Ansicht und
- Fig. 2: eine Verbindung zwischen Preßzylinder und Pressenstößel im senkrechten Schnitt.

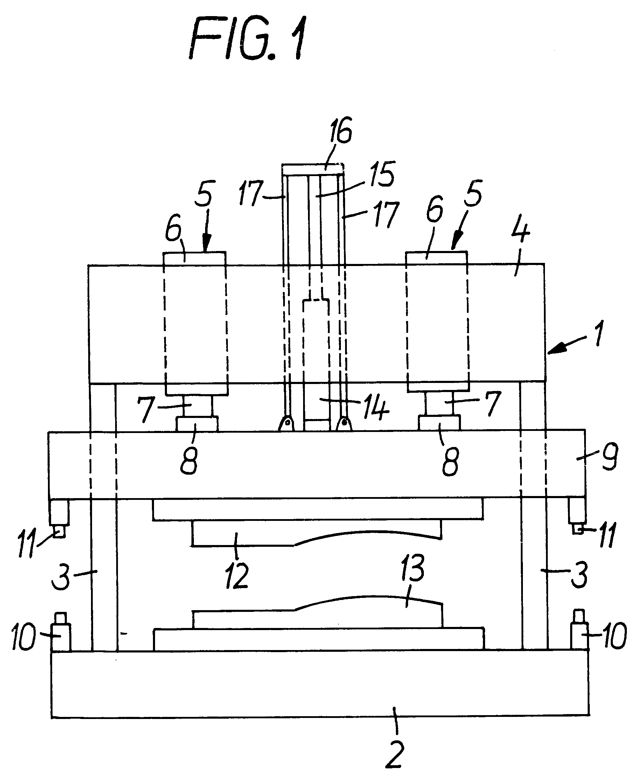

Wie Fig. 1 zeigt, weist die hydraulische Presse ein rahmenartiges Gestell 1 auf, das aus einem Pressentisch 2, zwei seitlich nahe den beiden Stirnseiten des Pressentisches 2 angeordneten Säulen 3 und einem die beiden Säulen 3 miteinander verbindendes Querhaupt 4 besteht. Im Querhaupt 4 sind zwei Preßzylinder 5 mit ihrem Zylinderteil 6 zu beiden senkrechten Pressen-Mittelebenen symmetrisch angeordnet. Die als Plunger 7 ausgebildete Kolbenstangen der Preßzylinder 5 greifen jeweils in ein hydrostatisches Lagerelement 8 ein, das jeweils auf dem Pressenstößel 9, der beidendig durch die beiden Säulen 3 geführt ist, angeordnet ist. Die Führung an den Säulen 3 erfolgt über nicht dargestellte, hydraulisch anstellbaren Laufrollen. Beidendig auf dem Pressentisch 2 sind jeweils paarweise zwei als Hydraulikzylinder 10 ausgebildete Gegenhalteeinrichtungen angeordnet, die jeweils mit einer am Pressenstößel 9 befestigten, höhenverstellbaren Gewindespindel 11 zusammenwirken. Der Pressenstößel 9 und der Pressentisch 2 tragen jeweils das Ober- und Unterteil 12 und 13 des Preßwerkzeugs. Da die Preßzylinder 5 nur Druckkräfte auf den Pressenstößel übertragen, sorgt ein zentrisch zur Presse angeordneter und am Querhaupt 4 befestigter Rückholzylinder 14 für den Aufwärtshub des Pressenstößels. Zu diesem Zweck greift die nach oben ausfahrbare Kolbenstange 15 des Rückholzylinders 14 über einen Querbalken 16 an zwei Zugstangen 17 an, die an der Oberseite des Pressenstößels 8 verankert sind.

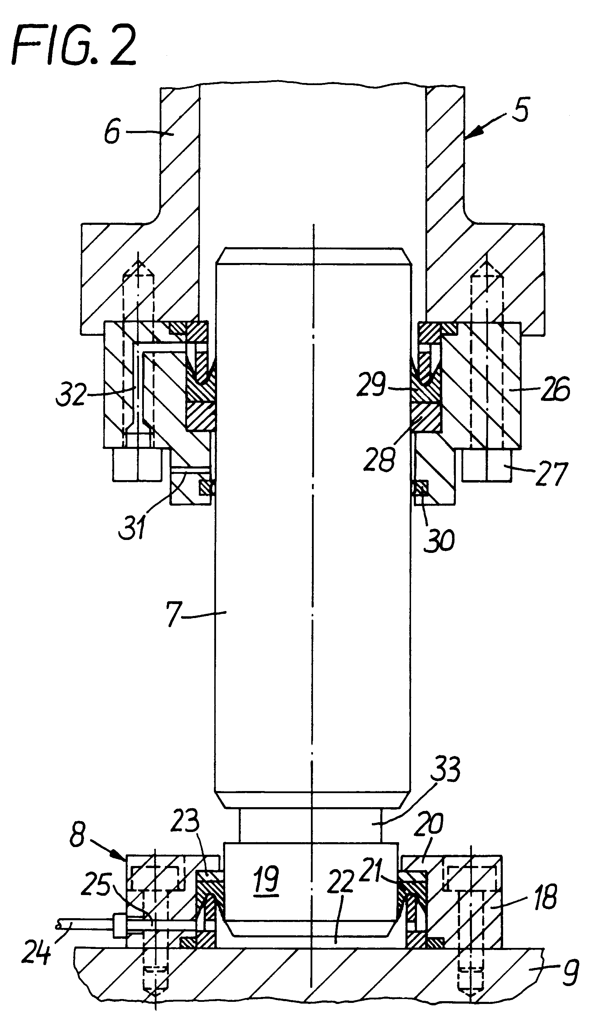

Wie aus Fig. 2 ersichtlich, weist das hydrostatische Lagerelement 8 einen auf der Oberseite des Pressenstößels 9 angeschraubten Ringkörper 18 auf, in den das einen Zapfen 19 bildende Ende des die Kolbenstange des Preßzylinders 5 bildenden Plungers 7 schließend eingreift. An seiner dem Pressenstößel 9 abgewandten Oberseite weist der Ringkörper 18 einen nach innen weisenden Flansch 20 auf, der der Abstützung eines ringförmigen Dichtelements 21 dient. Zwischen dem Zapfen 19 und der Oberseite des Pressenstößels 9 ist durch eingefüllte Hydraulikflüssigkeit somit eine abgeschlossene Kammer 22 gebildet, über welche die hydrostatische Kraftübertragung vom Preßzylinder auf den Pressenstößel erfolgt. Zwischen dem Dichtelement 21 und dem Flansch 20 ist noch ein ringförmiges Führungselement 23, z.B. ein sog. Backring angeordnet, der die alleinige Führung zwischen dem Zapfen 19 und dem Ringkörper 18 übernimmt, wodurch sich vorteilhaft eine sehr kurze, Winkelverstellungen ermöglichende Einspannlänge ergibt. Das Dichtungselement 21 ist zweckmäßig als sog. Nutring ausgebildet. Für ein Nachfüllen von Hydraulikflüssigkeit ist in dem Ringkörper 18 eine mit einem Nachfüllanschluß 24 versehene radiale Bohrung 25 angeordnet.

Preßzylinderseitig ist der Plunger 7 in eine Führung 26 eingespannt, die stirnseitig an dem Zylinderteil 6 des Preßzylinders 5 über Schrauben 27 angeflanscht ist. Das eigentliche Führungselement ist ein elastischer, z.B. aus einem geeignetem Kunststoff bestehender Führungsring 28 von geringer axialer Länge, an den sich zylinderseitig ein Dichtungsring 29, zweckmäßig wieder ein Nutring, anschließt. Am äußeren Ende der Führung ist ein weiterer als Abstreifer ausgebildeter Dichtungsring 30 vorgesehen, wobei zwischen diesem und dem Führungsring eine Leckagebohrung 31 angeordnet ist. Ferner befindet sich in der Führung 26 eine Ablaßbohrung 32 für die Hydraulikflüssigkeit des Zylinders 5.

Durch den Führungsring 28 ist ebenfalls eine kurze Einspannlänge gegeben, so daß im Zusammenwirken mit dem Führungselement 23 eine ggf. nicht zu verhindernde "Schiefeinstellung" des Plungers 7 zur Vermeidung von Zwängungen gewährleistet ist. Diese Ausführungsform der Erfindung bringt ferner den weiteren Vorteil, daß im Zylinderteil des Preßzylinders 5 keine weiteren Verschleißteile vorhanden sind, wie sie sonst am Kolben des Hydraulikzylinders erforderlich sind. Es ist aber auch möglich, den Preßzylinder 5 raumbeweglich im Querhaupt 4 zu lagern, was bei einem mit einem Kolben versehenen Preßzylinder anstelle der beschriebenen Plunger-Lösung, aber auch zusätzlich zu dieser, erfolgen kann. Die Zusammenfassung der abdichtenden Teile in der angeflanschten Führung 26 ermöglicht geringeren Fertigungsaufwand für den Zylinderteil 6.

Der Zapfen 19 des Plungers 7 ist - bezogen auf die Eingriffsstellung - im Bereich etwas oberhalb des Ringkörpers 18 mit einer Ringnut 33 versehen, die der Halterung des Plungers 7 beim Wechsel des Dichtelements 21 und des Führungselements 23 sowie auch für einen Sensorabgriff dient.

## Patentansprüche

1. Hydraulische Presse, insbesondere zum Formteilverpressen von faserverstärkten Kunststoffen, bei der die Preßkraft durch mindestens einen hydraulischen Preßzylinder über eine zugeordnete Verbindungsstelle in einen seitlich geführten und durch Gegenhaltereinrichtungen abbremsbaren Pressenstößel eingeleitet wird, wobei die Verbindungsstelle durch ein hydrostatisches Lagerelement gebildet ist, das einen teilweise mit Hydraulikflüssigkeit gefüllten und innen mit mindestens einem ringförmigen Dichtelement versehenen Ringkörper aufweist, in den die als Plunger ausgebildete Kolbenstange des Preßzylinders winkelbeweglich eintaucht,
**dadurch gekennzeichnet,**
daß auf den Pressenstößel (9) mindestens zwei Preßzylinder (5) symmetrisch von oben wirken, deren Plunger (7) im Endbereich ihres Zylinderteils (6) winkelbeweglich abdichtend geführt sind.

2. Presse nach Anspruch 1, dadurch gekennzeichnet, daß das hydrostatische Lagerelement (8) als Ringkörper (18) ausgebildet und auf einer Stützfläche des Stößels (9) dichtend angeordnet ist.

3. Presse nach Anspruch 2, dadurch gekennzeichnet, daß der Ringkörper (18) angeschraubt ist.

4. Presse nach Anspruch 1, 2 oder 3, dadurch gekennzeichnet, daß der Plunger (7) an seinem dem Lagerelement zugeordnetem Ende einen Zapfen (19) aufweist.

5. Presse nach Anspruch 4, dadurch gekennzeichnet, daß der Zapfen (19) lösbar angeordnet ist.

6. Presse nach einem der vorhergehenden Ansprüche, dadurch gekennzeichnet, daß die Führung (26) des Plungers (7) durch einen am Zylinderteil (6) angeordneten, Winkelverstellungen ermöglichenden Führungsring (28) gebildet ist, an den sich beidseitig ein Dichtungsring (29; 30) anschließt.

7. Presse nach Anspruch 6, dadurch gekennzeichnet, daß der Führungsring (28) eine geringe axiale Länge aufweist und/oder elastisch ausgebildet ist.

8. Presse nach Anspruch 6 oder 7, dadurch gekennzeichnet, daß die Führung (26) an dem Zylinderteil (6) stirnseitig angeflanscht ist.

9. Presse nach einem der vorhergehenden Ansprüche, dadurch gekennzeichnet, daß der Ringkörper (18) am oberen Ende einen nach innen weisenden Flansch (20, 20'′) zur Abstützung für ein ringförmiges Dichtelement (21) aufweist.

10. Presse nach einem der vorhergehenden Ansprüche, dadurch gekennzeichnet, daß der Ringkörper (18) eine radiale Bohrung (25) zum Nachfüllen von Hydraulik-Flüssigkeit aufweist.

11. Presse nach einem der vorhergehenden Ansprüche, dadurch gekennzeichnet, daß der Zapfen (19) oberhalb des Ringkörpers (18) mindestens eine Ringnut 33 aufweist.

## Claims

1. Hydraulic press, particularly for press moulding fibre reinforced plastics, in which the moulding pressure is initiated by at least one hydraulic pressing cylinder via an assigned junction point in a press ram which is controlled at the sides and is brakable by counter-stay devices, the junction point being formed by a hydrostatic bearing element, which has an annular body partly filled with hydraulic fluid and provided inside with at least one annular sealing element, the piston rod of the pressing cylinder, designed as a plunger, plunging, with angular movement, into said annular body, characterized in that, on the press ram (9), at least two pressing cylinders (5) act symmetrically from above, the plungers (7) of which seal with angular movement in the end region of their cylinder portion (6).

2. Press according to claim 1, characterized in that the hydrostatic bearing element (8) is designed as an annular body (18) and is arranged, sealing, on a supporting surface of the ram (9).

3. Press according to claim 2, characterized in that the annular body (18) is bolted on.

4. Press according to claim 1, 2 or 3, characterized in that the end of the plunger (7) facing the bearing element has a gudgeon (19).

5. Press according to claim 4, characterized in that the gudgeon (19) is detachably arranged.

6. Press according to one of the preceding claims, characterised in that the guide (26) of the plunger (7) is formed by a guide ring (28), allowing angular movement, arranged on the cylinder portion (6), a sealing ring (29; 30) being added on both sides of said guide ring (28).

7. Press according to claim 6, characterized in that the guide ring (28) is of short axial length and/or is elastically designed.

8. Press according to claim 6 or 7, characterized in that the guide (26) is flanged onto the front of the cylinder portion (6).

9. Press according to one of the preceding claims, characterised in that the upper end of the annular body (18) has a flange (20, 20'), pointing inwards, for supporting an annular sealing element (21).

10. Press according to one of the preceding claims, characterised in that the annular body (18) has a radial drilled hole (25) for topping up the hydraulic fluid.

11. Press according to one or the preceding claims, characterised in that the gudgeon (19) has at least one annular groove (33) above the annular body (18).

## Revendications

1. Presse hydraulique destinée en particulier au moulage par compression de matières synthétiques renforcées par fibres, pour laquelle la force de compression est introduite par au moins un cylindre hydraulique à presser au-delà d'un point de jonction correspondant, dans un coulisseau guidé latéralement et freinable par des dispositifs de contre-bouterolles, le point de jonction étant formé par un élément d'appui hydrostatique qui présente un corps annulaire partiellement rempli d'un fluide hydraulique et muni à l'intérieur d'au moins un élément d'étanchéité en forme d'anneau, corps annulaire dans lequel est immergée avec un mouvement angulaire la tige du piston conçue en tant que piston plongeur, caractérisée en ce qu'au moins deux cylindres à presser (5) agissent symétriquement d'en haut sur le coulisseau (9), cylindres à presser dont les pistons plongeurs (7) sont guidés de façon étanchante et avec un mouvement angulaire dans la zone terminale de leur partie cylindrique (6).

2. Presse selon la revendication 1, caractérisée en ce que l'élément d'appui hydrostatique (8) est conçu en tant que corps annulaire (18) et est disposé de façon étanchante sur une surface de support du coulisseau (9).

3. Presse selon la revendication 2, caractérisée en ce que le corps annulaire (18) est vissé.

4. Presse selon les revendications 1, 2 ou 3, caractérisée en ce que le piston plongeur (7) présente un tourillon (19) à son extrémité affectée à l'élément d'appui.

5. Presse selon la revendication 4, caractérisée en ce que le tourillon (19) est disposé de façon mobile.

6. Presse selon l'une des revendications précédentes, caractérisée en ce que le guidage (26) du piston plongeur (7) est formé par une bague de guidage (28) disposée sur la partie cylindrique (6), permettant des ajustages angulaires et à laquelle se raccorde des deux côtés un anneau d'étanchéité (29, 30).

7. Presse selon la revendication 6, caractérisée en ce que la bague de guidage (28) présente une faible longueur axiale et/ou est conçue de façon élastique.

8. Presse selon les revendications 6 ou 7, caractérisée en ce que le guidage (26) est bridé à la partie cylindrique (6) sur la face.

9. Presse selon l'une des revendications précédentes, caractérisée en ce que le corps annulaire (18) présente à son extrémité supérieure une bride tournée vers l'intérieur (20, 20') et destinée à supporter un élément d'étanchéité en forme d'anneau (21).

10. Presse selon l'une des revendications précédentes, caractérisée en ce que le corps annulaire (18) présente un creux radial (25) destiné au remplissage en fluide hydraulique.

11. Presse selon l'une des revendications précédentes, caractérisée en ce que le tourillon (19) situé audessus du corps annulaire (18) présente au moins une rainure pour anneau de retenue (33).
